Europäisches Patentamt

**European Patent Office**

**Office européen des brevets**

(11) Numéro de publication: **0 250 687**

**A1**

(12) # DEMANDE DE BREVET EUROPEEN

(21) Numéro de dépôt: 86401405.5

(22) Date de dépôt: 26.06.86

(51) Int. Cl.4: **B29C 45/14** , B29C 63/02 , B32B 15/08

(43) Date de publication de la demande:
07.01.88 Bulletin 88/01

(84) Etats contractants désignés:
AT BE CH DE GB IT LI LU NL SE

(71) Demandeur: **MONOPLAST S.A.**
**14, Avenue du Maréchal Leclerc**
**F-40140 Soustons(FR)**

(72) Inventeur: **Marcel, Henri-Pierre**
**6 allée des Cyprès**
**F-40140 Soustons(FR)**

(74) Mandataire: **Viard, Jean et al**
**Cabinet VIARD 28 bis, avenue Mozart**
**F-75016 Paris(FR)**

(54) **Procédé de métallisation d'objets en matière plastique et objets obtenus selon ce procédé.**

(57) Procédé de métallisation d'objets en matière plastique conformés par injection ou thermoformage, qui consiste à appliquer sur un fond coloré (1) un film souple (5) portant une couche mince métallisée (7) par évaporation sous vide.

Applications : obtention d'un bon aspect de métallisation uniforme, notamment sur les emballages et récipients.

$6\rightarrow$

5

7

1

**FIG.2**

EP 0 250 687 A1

La présente invention a pour objet un procédé de métallisation d'objets en matière plastique permettant de modifier la présentation extérieure desdits objets et destiné en particulier, mais non exclusivement, aux emballages et récipients, ainsi que les objets obtenus selon ledit procédé.

On connaît déjà des procédés de métallisation dont le premier consiste à colorer la feuille destinée à constituer l'objet dans la masse et à introduire dans celle-ci un pigment métallique composé de petits copeaux de métal, généralement d'aluminium, et un colorant, la matière étant ainsi colorée en fonction du résultat à obtenir et par exemple en gris pour obtenir un effet argent, et en jaune pour obtenir un effet or. Il s'agit de la technique mise en oeuvre dans les peintures métallisées. Malheureusement, lors du thermoformage destiné à mettre en forme l'objet, on n'obtient qu'un résultat médiocre et l'aspect métallisé n'est pas évident. Pour les objets obtenus par injection, le résultat est moins mauvais dans la mesure où l'aspect est lié à l'épaisseur des parois de l'objet qui est habituellement supérieure en injection qu'en thermoformage.

On connait également des emballages constitués par un film métallisé sous vide avec la nuance de couleur désirée ainsi que des objets obtenus par thermoformage de tels films. Malheureusement, lorsqu'on étire la feuille au cours du thermoformage, on obtient des variations d'intensité du coloris qui donnent un résultat médiocre.

En ce qui concerne les objets obtenus par injection, il est possible de métalliser directement par évaporation sous vide l'objet à décorer mais ce procédé est d'un coût élevé et on reste limité par le nombre de coloris disponibles des métaux à évaporer. De plus, la couche métallique n'est pas protégée.

La présente invention a pour objet de pallier ces inconvénients et de proposer un procédé de fabrication pouvant être mis facilement en oeuvre sur les matériels existants.

Selon la présente invention, le procédé de métallisation est caractérisé en ce qu'il consiste à former un complexe associant un support préablement coloré, un film mince métallisé , la couche métallique etant disposée entre le support et le film.

Dans le cas où le complexe multicouche est thermoformé, le support étant constitué par une feuille extrudée, l'adhérence du film sur la feuille provient notamment du calandrage qui est réalisé à la sortie de l'extrudeuse produisant la feuille, le film métallisé pouvant être appliqué contre l'une des faces extérieures de la feuille, la couche métallique étant disposée contre la surface extérieure de la feuille lors du calandrage. La mise en oeuvre peut ainsi être obtenue sur du matériel existant sans causer de difficultés. Le complexe peut également être formé à tout moment et non seulement à la sortie de l'extrudeuse.

Il est possible de métalliser industriellement un film à un coût relativement abordable et la couche métallique est ainsi prise en sandwich entre la feuille et le film extérieur ce qui la protège des rayures. Lorsqu'on étire le complexe (feuille + film), le dépôt métallique se déforme d'une manière continue conservant un bon aspect de surface, la coloration de la feuille de fond contribuant à l'effet final.

Dans le cas de l'injection, le film métallisé est introduit directement dans le moule et c'est la pression appliquée par la matière injectée qui le conforme de manière à ce que le résultat obtenu soit analogue à celui obtenu par thermoformage.

D'autres caractéristiques et avantages de l'invention apparaîtront au cours de la description qui va suivre d'un mode particulier de réalisation, donné uniquement à titre d'exemple non limitatif, en regard des dessins qui représentent :

- la Fig.1, un schéma du calandrage permettant de lier la feuille et le film ;
- la Fig.2, une coupe verticale du complexe obtenu selon la présente invention.

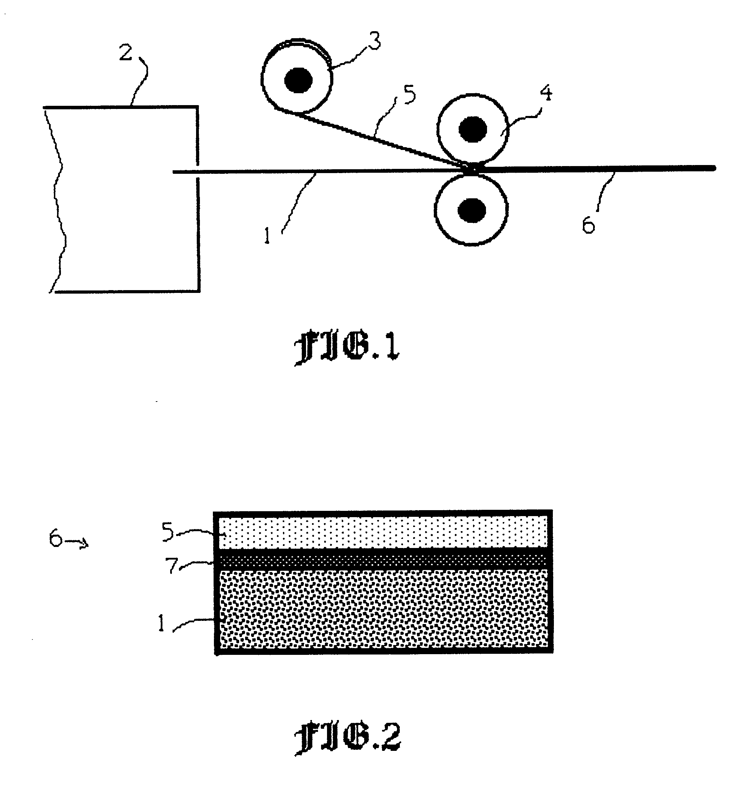

Sur la Fig.1, la feuille ou couche de fond 1 sort encore chaude de l'extrudeuse 2. A partir d'une bobine 3 chargée de film métallisé 5, on déroule ce film de manière à ce qu'il pénètre simultanément à la feuille 1 entre les rouleaux de calandrage 4 qui, par thermocompression forment le complexe 6.

Le complexe 6 se compose donc, comme représenté sur la Fig.2 d'une feuille de base 1 colorée en jaune, en gris, ou en toute autre couleur en fonction du résultat désiré. Cependant, selon l'invention, la feuille 1 est toujours colorée. Au-dessus de la couche 1 se trouve une couche métallique 7, elle-même recouverte par un film 5.

Pour fixer les idées uniquement, la feuille 1 peut être constituée par du polystyrène dont l'épaisseur est de 0,85 cm., l'épaisseur de la couche métallique étant de 10 à 15 microns et celle du film de 45 microns. Bien entendu, tout autre matériau plastique adapté peut être employé.

Le complexe ainsi obtenu peut être thermoformé. Lorsque l'on étire la feuille au cours de l'opération, on obtient un objet où les variations d'épaisseur de la couche métallique sont compensées par une transparence accrue de cette couche, de sorte que, la couleur de fond devient plus apparente. Il en résulte une impression d'ensemble excellente par rapport aux résultats obtenus par la technique connue.

Le procédé selon la présente invention peut également être mis en oeuvre lorsque la matière plastique est injectée. Bien entendu, la matière colorée n'est injectée qu'après que le film métallisé 5,7 ait été introduit dans le moule. L'adaptation d'un dispositif d'amenée de la feuille est relativement simple.

Dans les deux cas de mise en oeuvre du procédé, on obtient un aspect métallisé très satisfaisant à des coûts relativement bas étant donné que le coût de la métallisation est compensé, et au-delà, par le fait qu'il est possible de n'utiliser qu'un simple colorant pour teinter la feuille dans sa masse.

La présente invention vise également les produits obtenus selon le procédé ci-dessus.

Il va de soi que de nombreuses variantes peuvent être introduites, notamment par substitution de moyens techniquement équivalents sans sortir pour celà du cadre de l'invention.

## Revendications

1° Procédé de métallisation caractérisé en ce qu'il consiste à former un complexe associant une couche mince (7) métallique portée par un film (5) et un support coloré (1).

2° Procédé de métallisation selon la revendication 1, caractérisé en ce que l'on forme le complexe sous forme de couches planes qui sont ensuite thermoformées.

3° Procédé de métallisation selon la revendication 1, caractérisé en ce que le film métallisé (5,7) est introduit dans un moule d'injection , la face métallisée étant tournée vers l'intérieur du moule, après quoi la matière plastique colorée (1) est injectée.

4° Objets en matière thermoplastique obtenus par le procédé selon l'une des revendications précédentes.

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 257 502 (A.C. ANSELM) <br> * En entier, en particulier page 2, colonne de droite, dernier paragraphe - page 3, colonne de gauche, paragraphe 2 * | 1,4 | B 29 C  45/14 <br> B 29 C  63/02 <br> B 32 B  15/08 |
| | --- | | |
| X | FR-A-1 352 389 (A.C. ANSELM) <br> * En entier * | 1,4 | |
| | --- | | |
| X | FR-A-2 422 108 (R. BOSCH) <br> * En entier, en particulier page 1, lignes 25-28 * | 1-4 | |
| | --- | | |
| Y | DE-A-2 009 819 (E. WACHSMANN) <br> * Figures; page 4, paragraphe 3 * | 1-4 | |
| | --- | | |
| Y | DE-A-1 504 812 (M. REINHARD) <br> * En entier * | 1-4 | DOMAINES TECHNIQUES RECHERCHES (Int. Cl.4) <br><br> B 29 C |
| | --- | | |
| Y | FR-A-1 503 392 (SOCIETE DE SIGNALISATIONS AUTOMOBILES) <br> * Page 2, colonne de gauche, lignes 22-50 * | 1-4 | |
| | --- | | |
| Y | FR-A-1 578 968 (SOCIETE DE SIGNALISATIONS AUTOMOBILES) <br> * En entier * | 1,3,4 | |
| | ---          -/- | | |

Le present rapport de recherche a été etabli pour toutes les revendications

| Lieu de la recherche | Date d'achèvement de la recherche | Examinateur |
|---|---|---|
| LA HAYE | 06-02-1987 | MILITZER |

## DOCUMENTS CONSIDERES COMME PERTINENTS

Page  2

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 013 919  (M. BIALY) <br> * En entier, en particulier colonne de droite, ligne 33 * <br><br> ----- | 1 | |
| | | | **DOMAINES TECHNIQUES RECHERCHES** (Int. Cl.4) |

Le présent rapport de recherche a été établi pour toutes les revendications

| Lieu de la recherche | Date d'achèvement de la recherche | Examinateur |
|---|---|---|
| LA HAYE | 06-02-1987 | MILITZER |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou apres cette date
D : cité dans la demande
L : cité pour d'autres raisons

& : membre de la même famille, document correspondant

OEB Form 1503 03 82